# EUROPEAN PATENT APPLICATION

(11) **EP 2 395 706 A1**
(43) Date of publication of application: **14.12.2011**
(21) Application number: 11172496.9
(22) Date of filing: 03.05.2007
(51) Int. Cl.: H04L 12/28, H04L 29/12

(54) **Interworking point to point protocol for digital subscriber line access with ethernet connections in the aggregation network**

(30) Priority: 05.05.2006 GB 0608881
(62) Divisional of application: 07732661.9
(71) Applicant: Nortel Networks Limited, St.Laurent, Québec H4S 2A9 (CA)
(72) Inventor: Allan, David, Ottawa, Ontario H4S 2A9 (CA); Bragg, Nigel, West Colville, Cambridgeshire K2B 5P9 (GB)
(74) Representative: Spaargaren, Jerome

(57) **Abstract**

Methods and apparatus for enabling the establishment of a Point to Point Protocol (PPP) session to a broadband network gateway through an access node of a packet-switched wireline aggregation network and methods and apparatus for enabling Ethernet frame data to be transported through an access node of packet-switched wireline aggregation network between a remote gateway a broadband network gateway are provided. In one aspect conventional PPP over Ethernet (PPPoE) BNG discovery using broadcast PADI messages is replaced by configured unicast PADI messages to specified BNGs over Ethernet Connections. In other aspects Ethernet data is transported through the access node by swapping the upstream source MAC address with the MAC address of the access node to shield the provider network from customer MAC addresses, and swapping the downstream destination MAC address to the MAC address of the remote gateway by looking up the MAC address of the remote gateway in a mapping of PPPoE Session ID to MAC address of the remote gateway.

## Description

### Field:

The present invention relates to methods and apparatus for enabling the establishment of a Point to Point Protocol (PPP) session to a broadband network gateway through an access node of a packet-switched wireline aggregation network and to methods and apparatus for enabling Ethernet frame data to be transported through an access node of packet-switched wireline aggregation network between a remote gateway a broadband network gateway.

### Background:

Digital Subscriber Line (DSL) is a popular technology for providing broadband network access typically over a connection over installed Public Switched Telephone Network (PSTN) copper twisted pair cabling from service providers' local exchanges to customer premises. A DSL modem is used at each end of the cabling to encode and decode data transmitted over the connection. At the local exchange, an Access Node (AN) - for example a DSL Access Multiplexer (DSLAM) - is used to aggregate many customer DSL connections for transmission over a high speed backbone network to a Broadband Network Gateway (BNG) - for example a Broadband Remote Access Server (BRAS) - connected to a private or public network. The BNG may be operated by an Internet Service Provider (ISP), for example.

DSL networks typically use some variation of IETF RFC 1661 - Point to Point Protocol (PPP) - to provide the link between the customer Remote Gateway ― such as an Ethernet Card behind the customer DSL modem - and the service provider DSLAM. Also typically, Asynchronous Transfer Mode (ATM) is used as the transport technology. In North America, service providers mostly use IETF RFC 2516 (PPP over Ethernet (PPPoE)) over IETF RFC 2684 Multiprotocol Encapsulation over ATM Adaptation Layer 5 whereas in Europe, many providers use IETF RFC 2364 (PPP over ATM Adaptation Layer 5 (PPPoATM)).

There is much interest in using Ethernet technology in the aggregation network to provide connectivity between the AN and BNG. This require interworking between the DSL and Ethernet transport technologies. The DSL Forum has specified a PPPoA ― PPPoE interworking function for this purpose ― namely DSL Forum Technical Report TR-101, "Migration to Ethernet Based DSL Aggregation", April 2006.

Provider Backbone Transport (PBT), sometimes described as Connection Oriented Ethernet, is a known but relatively new technology for enabling carrier grade-use of Ethernet hardware to provide scaleable, traffic-engineered networking. PBT has been described in International Patent Publication Number WO 2005/099183 assigned to Nortel Networks Ltd. which document is incorporated herein by reference in its entirety.

In any environment where the Ethernet Medium Access Control (MAC) terminations are within the provider network, PBT permits normal Ethernet spanning tree and flooding operations to be replaced with explicit configuration of MAC forwarding within the entire or a designated range of Virtual LAN (VLAN) identifiers (VIDs). Differential forwarding is achieved using a combination of VID and MAC destination address. Explicit configuration permits complete route freedom for configured VID/MAC paths, permitting superior mesh utilization, and engineering of path placement. This also extends the set of resiliency options open to the provider as large meshed Ethernet subnetworks can be operated independent of the limitations of spanning tree. PBT provides for both protection and restoration (when used in conjunction with a control plane as described in Fedyk, D., et.al. "GMPLS Control of Ethernet", IETF Internet Draft, draft-fedyk-gmpls-ethernet-ivl-01.txt, March 2006). Dataplane OAM in the form of ITU-T Y.1731/ IEEE 802.1ag ("Connectivity Fault Management", 802.1ag Work in Progress, December 2005) is used and protection coordination performed using ITU- T G.8031 procedures.

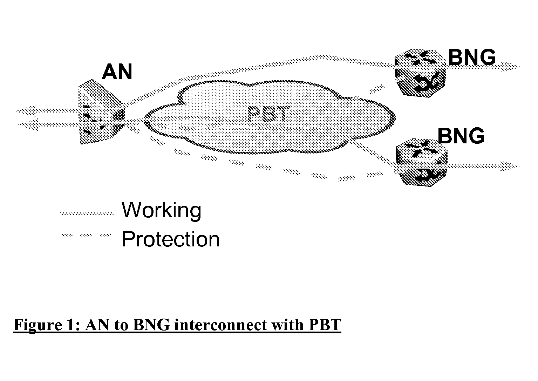

It is desirable to enable PBT to be used in the aggregation network from the AN to the BNG ― See Figure 1. Further it is desirable to do this regardless of the variation of PPP (PPPoA or PPPoE) used on the subscriber link. Where PPPoA from the subscriber is interworked with PPPOE in the backhaul will be referred to as "session interworking". When PPPoE sessions from the subscriber are combined into a common PPPoE session between the access node and the BNG we will refer to this as "session aggregation".

PPPoE was originally designed to operate over Ethernet as a connectionless medium, and therefore takes advantage of Ethernet broadcast and multicast capability. The PPPoE discovery mechanism allows each PPP session to learn the Ethernet address of the remote peer (ie BNG), as well as establish a unique session identifier. When a host wants to initiate a PPPoE session, it must first perform discovery to identify the Ethernet MAC address of the peer and establish a PPPoE Session ID.

Conventionally, the discovery process consists of the following steps:
1. The host (PPPoE client) broadcasts a PPPoE Active Discovery Initiation (PADI) packet to all remote BNGs in the network.
2. One or more remote BNGs respond to the PADI packet by sending a PPPoE Active Discovery Offer (PADO) packet, indicating that they can serve the client request. The PADO packet includes the name of the BNG from which it was sent.
3. The host sends a unicast PPPoE Active Discovery Request (PADR) packet to the BNG to which it wants to connect.
4. The selected BNG sends a PPPoE Active Discovery Session (PADS) packet to confirm the session.

However, there is a problem because the PADI packet requires broadcast discovery of the set of connected BNGs. However, a PBT "connection" cannot support broadcast discovery because Ethernet spanning tree and flooding/broadcasting are disabled in PBT.

One serendipitous aspect of the exchange outlined above is that the PPPoE session ID is administered by the BNG termination. This facilitates both session interworking and session aggregation.

Furthermore, an additional motive for session aggregation is that it is undesirable to use the customer MAC address in the provider network for a number of reasons. Firstly, this represents a security risk with unscrupulous customers using spoof MAC addresses to intercept other's network traffic. Secondly, some hardware manufacturers have re-used MAC addresses in Ethernet cards so there is a danger of customer MAC addresses being ambiguous in the provider network which could be highly disruptive.

One solution to the latter problem, would be to encapsulate the PPPoE using MAC in MAC encapsulation for use in PBT trunking rather than doing session aggregation at the PPPOE layer. In other words PPPoE encapsulated in PBT and do aggregation at the MAC layer. However, this is undesirable because it adds overhead (multiple Ethernet headers) and complexity.

Accordingly a solution is desired that enables PBT to be used in the aggregation network between the ANs and the BNGs which is also efficient and secure and may address both the session interworking and session aggregation scenarios.

Figure 1 illustrates an AN homed on multiple BNGs. A 1:1 protection group with a working and a back up is used to connect the AN to each BNG.

### Summary of the Present Invention

Methods and apparatus for enabling the establishment of a Point to Point Protocol (PPP) session to a broadband network gateway through an access node of a packet-switched wireline aggregation network and methods and apparatus for enabling Ethernet frame data to be transported through an access node of packet-switched wireline aggregation network between a remote gateway a broadband network gateway are provided. In one aspect common to both scenarios addressed, conventional PPP over Ethernet (PPPoE) BNG discovery using broadcast PADI messages is replaced by configured unicast PADI messages to specified BNGs over Ethernet Connections. In other aspects Ethernet data is transported through the access node by swapping the upstream source MAC address with the MAC address of the access node to shield the provider network from customer MAC addresses, and swapping the downstream destination MAC address to the MAC address of the remote gateway by looking up the MAC address of the remote gateway in a mapping of PPPoE Session ID to MAC address of the remote gateway.

According to one aspect of the present invention there is provided a method of transporting PPPOE over a PBT connection, the method comprising the steps of:
configuring the access node with data defining an Ethernet connection between the access node and the broadband network gateway, and
utilizing unicast communication instead of broadcast for the transmission of PADI messages between the access node and the broadband network gateway.

According to another aspect of the present convention, there is the utilization by the session interworking function defined in TR101 of PBT connectivity in lieu of traditional Ethernet connectivity.

According to another aspect of the present invention there is provided a method of enabling an Ethernet frame originating from a remote gateway and addressed to a broadband network gateway to be transported through an access node of packet-switched wireline aggregation network, the method comprising the following steps:
receiving the Ethernet frame at the access node;
modifying the received Ethernet frame by replacing a source MAC address of the Ethernet frame with a MAC address of the access node;
modifying the received Ethernet frame by replacing broadcast destination MAC addresses of the Ethernet frame with a MAC address of a BNG
sending the modified Ethernet frame to the broadband network gateway.
where the packet was a broadcast and connectivity to more than one BNG exists replicating the packet on each AN-BNG connection...

According to another aspect of the present invention there is provided a method of enabling an Ethernet frame originating from a broadband network gateway and addressed to an access node of packet-switched wireline aggregation network to be transported to a remote gateway, the method comprising the following steps:
storing data mapping a PPPoE Session ID to a MAC address of the remote gateway;
receiving the Ethernet frame at the access node;
using a PPPoE Session ID of the received Ethernet frame to look up the MAC address of the remote gateway in the stored mapping;
modifying the received Ethernet frame by replacing a destination MAC address of the Ethernet frame with the MAC address of the remote gateway;
sending the modified Ethernet frame to the remote gateway.

According to another aspect of the present invention there is provided an access node of packet-switched wireline aggregation network capable of enabling an Ethernet frame originating from a broadband network gateway and addressed to an access node of packet-switched wireline aggregation network to be transported to a remote gateway, the access node comprising:
a data store operable to store data mapping a PPPoE Session ID to a MAC address of the remote gateway;
an input for receiving the Ethernet frame at the access node;
a processor operable to look up the MAC address of the remote gateway in the stored mapping using a PPPoE Session ID of the received Ethernet frame;
a frame modifier operable to modify the received Ethernet frame by replacing a destination MAC address of the Ethernet frame with the MAC address of the remote gateway;
an output for sending the modified Ethernet frame to the remote gateway.

There now follows by way of example only a detailed description of preferred embodiments of the present invention in which:

### Brief Description of Figures:

Figure 1 illustrates an AN homed on multiple BNGs.

### Detailed Description of Preferred Embodiments of the Present Invention

The present invention uses the "on the wire" encoding described in IETF RFC 2516 (PPPoE) with one exception.

In a PBT aggregation environment, the service provider has a priori knowledge of the set of BNGs as PBT connectivity has been pre-configured. Therefore the MAC discovery PADI message is handled via configuration rather than broadcast discovery. However PADI is still required to obtain supported service information for a given BNG, which requires unicast replication on each PBT connection between the AN and the local constellation of BNGs. Accordingly, in the present invention an AN may send a unicast PADI at PBT trunk configuration time to discover the service associated with the far end BNG, or alternatively where PADI is used as a load management mechanism it may send a unicast PADI in response to the initiation of each interworked customer session.

Furthermore, according to the present invention the session aggregation function at the AN terminates the customer MAC layer, and remaps (rather than encapsulates) the PPPoE session to a common MAC address for the AN. This limits the scope of customer MAC information to the Remote Gateway (RG) - eg a PC Ethernet card behind the customer DSL modem - and AN, and significantly diminishes the number of MAC addresses to be supported in the aggregation network and BNG, shifting it from in the order of the number of customer terminations to in the order of the number of ANs. This also allows a single PBT AN to BNG connection to support numerous customer PPPoE sessions.

The session aggregation function at the AN performs the following functions:
1) Translation of broadcast PADI messages into a unicast message replicated for each PBT trunk. This is in the form of replacing the broadcast MAC address with each BNG unicast address, and the imposition of a VID tag identifying the current working PBT connection to that BNG.
2) Translation of the source MAC address of the RG with a source MAC address for the AN in the upstream (AN to BNG) direction.
3) Translation of the AN to RG MAC address indexed by PPPoE Session ID (SID) in the downstream (BNG to AN) direction.

The AN is subsequently able to correlate the BNG MAC address and PPPoE SID with the customer "U" interface, ATM Virtual Channel Connection (VCC) and PPPoE session. As the BNG administers session IDs, it will be unique per customer session despite the remapping of source addresses from RG to AN, such that the aggregation function only requires minimal intervention in the PDU content in the process of remapping the session from the AN to the RG.

This offers numerous benefits to the provider:
- a significant increase in scalability beyond that offered by the TR-101 tagging schemes as PBT uses VID/MAC dataplane addressing. This offers 108 bit identification of connectivity between a given AN/BNG vs. 12 bits through use of the S-tag. This can be achieved with minimal modification to WT-101 implementations.
- Customer port/session identification is performed via a combination of the line identification VSI and the RFC 2516 session multiplexing field, obviating the need for double tagging.
- PBT offers route freedom in an Ethernet subnetwork permiting AN-BNG connectivity to be engineered and extended across arbitrary distances
- PBT offers resilience independent of spanning tree
- In the case of PPPoE on the "U", PBT offers a mechanism to address both service and security issues caused by malicious or unintended MAC duplication.

## Claims

1. A method of enabling an Ethernet frame originating from a remote gateway and addressed to a broadband network gateway to be transported through an access node of a packet-switched aggregation network, the method comprising the following steps:
receiving the Ethernet frame at the access node;
modifying the received Ethernet frame by replacing a source MAC address of the Ethernet frame with a MAC address of the access node; and
sending the modified Ethernet frame to the broadband network gateway.

2. An access node of a packet-switched aggregation network capable of enabling an Ethernet frame originating from a remote gateway and addressed to a broadband network gateway to be transported, the access node comprising:
an input for receiving the Ethernet frame;
a frame modifier operable to modify the received Ethernet frame by replacing a source MAC address of the Ethernet frame with a MAC address of the access node; and
an output for sending the modified Ethernet frame to the broadband network gateway.

3. A method of enabling an Ethernet frame originating from a broadband network gateway and addressed to an access node of a packet-switched aggregation network to be transported to a PPPoE client, the method comprising the following steps:
storing data mapping a PPPoE Session ID to a MAC address of the PPPoE client;
receiving the Ethernet frame at the access node;
using a PPPoE Session ID of the received Ethernet frame to look up the MAC address of the PPPoE client in the stored mapping;
modifying the received Ethernet frame by replacing a destination MAC address of the Ethernet frame with the MAC address of the PPPoE client; and
sending the modified Ethernet frame to the PPPoE client.

4. An access node of a packet-switched network aggregation network capable of enabling an Ethernet frame originating from a broadband network gateway and addressed to an access node of a packet-switched aggregation network to be transported to a PPPoE client, the access node comprising:
a data store operable to store data mapping a PPPoE Session ID to a MAC address of the PPPoE client;
an input for receiving the Ethernet frame at the access node;
a processor operable to look up the MAC address of the PPPoE client in the stored mapping using a PPPoE Session ID of the receive Ethernet frame;
a frame modifier operable to modify the received Ethernet frame by replacing a destination MAC address of the Ethernet frame with the MAC address of the PPPoE client; and
an output for sending the modified Ethernet frame to the PPPoE client.

5. The method of claim 3, wherein the PPPoE client is a remote gateway.

6. The method of claim 3, wherein the data mapping the PPPoE Session ID to a MAC address of the PPPoE client comprises data mapping a combination of a MAC address of the broadband network gateway and the PPPoE Session ID to a corresponding customer interface.

7. The method of claim 3, wherein the data mapping the PPPoE Session ID to a MAC address of the PPPoE client comprises data mapping a combination of a MAC address of the broadband network gateway and the PPPoE Session ID to a corresponding ATM virtual channel connection.

8. The method of claim 3, wherein the data mapping the PPPoE Session ID to a MAC address of the PPPoE client comprises data mapping a combination of a MAC address of the broadband network gateway and the PPPoE Session ID to a corresponding combination of a customer U interface and an ATM virtual channel connection.

9. The method of claim 1, wherein a working path and a protection path connect the access node to the broadband network gateway, the method further comprising setting a VLAN identifier (VID) tag in the modified Ethernet frame to identify the current working path to the broadband network gateway.

10. The method of claim 1, wherein the access node interworks with a plurality of broadband network gateways, further comprising load balancing among the plurality of broadband network gateways at the access node.

11. The access node of claim 4, wherein the data mapping the PPPoE Session ID to a MAC address of the PPPoE client comprises data mapping a combination of a MAC address of the broadband network gateway and the PPPoE Session ID to a corresponding customer interface.

12. The access node of claim 4, wherein the data mapping the PPPoE Session ID to a MAC address of the PPPoE client comprises data mapping a combination of a MAC address of the broadband network gateway and the PPPoE Session ID to a corresponding ATM virtual channel connection.

13. The access node of claim 4, wherein the data mapping the PPPoE Session ID to a MAC address of the PPPoE client comprises data mapping a combination of a MAC address of the broadband network gateway and the PPPoE Session ID to a corresponding combination of a customer U interface and an ATM virtual channel connection.

14. The access node of claim 2, wherein a working path and a protection path connect the access node to the broadband network gateway and the frame modifier is further operable to set a VLAN identifier (VID) tag in the modified Ethernet frame to identify the current working path to the broadband network gateway.

15. The access node of claim 2, wherein the access node interworks with a plurality of broadband network gateways and the access node further comprises load balancing logic operable to balance among the plurality of broadband network gateways.
